# EUROPEAN PATENT APPLICATION

(11) **EP 2 571 134 A1**
(43) Date of publication of application: **20.03.2013**
(21) Application number: 11780677.8
(22) Date of filing: 12.05.2011
(51) Int. Cl.: H02J 7/00, B60L 5/00, B60L 11/18, B60M 7/00, H01M 10/46, H02J 17/00

(54) **RESONANCE-TYPE NON-CONTACT POWER SUPPLY SYSTEM**

(30) Priority: 14.05.2010 JP 2010112099
(71) Applicant: TOYOTA JIDOSHA KABUSHIKI KAISHA, Toyota-shi, Aichi-ken, 471-8571 (JP)
(72) Inventor: TAKADA, Kazuyoshi, Kariya-shi Aichi 448-8671 (JP); SUZUKI, Sadanori, Kariya-shi Aichi 448-8671 (JP); SAKODA, Shimpei, Kariya-shi Aichi 448-8671 (JP); YAMAMOTO, Yukihiro, Kariya-shi Aichi 448-8671 (JP); ICHIKAWA, Shinji, Toyota-shi Aichi 471-8571 (JP); NAKAMURA, Toru, Toyota-shi Aichi 471-8571 (JP)
(74) Representative: Kopp, Stephan
(86) International application number: PCT/JP2011/060943
(87) International publication number: WO 2011/142420

(57) **Abstract**

Power supply equipment (10) is provided with an AC power source (11) and a primary side resonance coil (13b) which receives a power supply from the AC power source. Movable body equipment (20) is provided with: a secondary side resonance coil (21 b) which receives power from the primary side resonance coil; a rectifier (23) which rectifies the received power; a charger (24) to which the rectified power is supplied; and an electrical storage device (25) which is connected to the charger. The movable body equipment (20) is further provided with: a matching unit (22) which is provided between the secondary side resonance coil (21 b) and the rectifier (23); a power supply determination unit (26) which determines whether or not power is being supplied to the movable body equipment (20) from the power supply equipment (10); a power reception determination unit (26) which determines whether or not the movable body equipment is receiving power from the power supply equipment; and a control unit (26) which changes, on the basis of the determination information from both the power supply determination unit and the power reception determination unit, the matching unit to a mismatch state if power is being supplied to the movable body equipment even though the movable body equipment is in a state in which the reception of power from the power supply equipment should be refused.

## Description

### TECHNICAL FIELD

The present invention relates to a resonance type non-contact power supply system, and more particularly, to a resonance type non-contact power supply system provided with an electrical storage device on a power reception side.

### BACKGROUND ART

Patent Document 1 proposes a charging system capable of charging an electrical storage device mounted in a vehicle by wirelessly receiving charging power from a power source located outside the vehicle by a resonance method. The charging system of the document includes an electric vehicle and a power supply device, and the electric vehicle includes a secondary self-resonance coil, i.e., a secondary-side resonance coil, a secondary coil, a rectifier and an electrical storage device. The power supply device includes a high-frequency power driver, a primary coil and a primary self-resonance coil, i.e., a primary-side resonance coil.

### PRIOR ART DOCUMENT

### Patent Document

Patent Document 1: Japanese Laid-Open Patent Publication No. 2009-106136

### SUMMARY OF THE INVENTION

### Problems that the Invention is to Solve

When a secondary battery is charged, if a charging operation is continued even after the secondary battery is fully charged, and if such a charging operation is repeated until the secondary battery is overcharged, the battery life of the secondary battery becomes short. Hence, when a secondary battery is charged, it is necessary to stop or complete the charging operation before it is overcharged. When the resonance type non-contact power supply system is normally operating, there is no problem. However, there is a possibility that although the secondary battery is fully charged, the charging operation cannot be completed due to a failure on the power reception side, e.g., a failure of a charger. Another possibility is that although the resonance type non-contact power supply system outputs a charging-cancellation command before the secondary battery is fully charged, the charging operation of the secondary battery cannot be canceled due to a failure on the power reception side. However, such cases are not described in the document. On the other hand, it seems to be possible that the power reception side requires the power supply side to cancel the power supply through wireless communication, the power supply side cancels power supply, thereby canceling the charging operation of the secondary battery. However, as a case where the power supply equipment is configured to supply electric power to a plurality of power reception equipment at the same time, i.e., as a case where there coexist power reception equipment in which power supply should be canceled and power reception equipment in which power supply should be continued, there is a possibility that power supply equipment cannot immediately cancel the power supply.

The objective of the present invention is to provide a resonance type non-contact power supply system capable of canceling a charging operation on a power reception side even if the power reception side does not require a power supply side to cancel power supply through wireless communication when the charging operation cannot be canceled due to a failure of the power reception side even though cancellation of the charging operation of an electrical storage device is desired.

### Means for Solving the Problems

To achieve the above objective, according to a first aspect of the present invention, there is provided a resonance type non-contact power supply system including power supply equipment and movable body equipment. The power supply equipment includes an AC power source and a primary-side resonance coil, which receives a power supply from the AC power source. Movable body equipment is provided with a secondary-side resonance coil, which receives electric power from the primary-side resonance coil, a rectifier, which rectifies electric power received by the secondary-side resonance coil, a charger, to which the electric power rectified by the rectifier is supplied, and an electrical storage device, which is connected to the charger. The movable body equipment is further provided with a matching unit, power supply determination unit, a power reception determination unit, and a control unit. The matching unit is located between the secondary-side resonance coil and the rectifier. The power supply determination unit determines whether or not electric power is being supplied to the movable body equipment from the power supply equipment. The power reception determination unit determines whether or not the movable body equipment should receive electric power from the power supply equipment. On the basis of the determination information of the power supply determination unit and determination information of the power reception determination unit, the control unit brings the matching unit into a mismatch state when electric power is being supplied to the movable body equipment even though the movable body equipment should refuse power reception from the power supply equipment.

According to the invention, electric power supplied from the primary-side resonance coil of the power supply equipment in a non-contact manner is received by the secondary-side resonance coil. Electric power received by the secondary-side resonance coil is supplied to the charger through the matching unit and the rectifier of the movable body equipment, the charger converts voltage of the electric power into one suitable for a charging operation of a secondary battery. The electric power is supplied to the secondary battery and the electrical storage device is charged. During the charging operation, the power supply determination unit determines whether or not electric power is being supplied from the power supply equipment. The power reception determination unit determines whether or not electric power should be received. If electric power is being supplied even though the movable body equipment should refuse the power reception, the control unit of the movable body equipment brings the matching unit of the movable body equipment into a mismatch state on the basis of determination information of the power supply determination unit and the power reception determination unit. If the matching unit of the movable body equipment is brought into the mismatch state, reflected electric power to the AC power source of electric power that is output from the AC power source to the primary-side resonance coil is increased, and the charging operation of the electrical storage device is substantially canceled. Hence, when the control unit of the movable body equipment cannot cancel the charging operation due to a failure of the power reception side even through cancellation of the charging operation is desired, it is possible to cancel the charging operation by the movable body equipment (power reception side) without requiring the power supply equipment (power supply side) to cancel the charging operation through wireless communication.

### BRIEF DESCRIPTION OF THE DRAWINGS

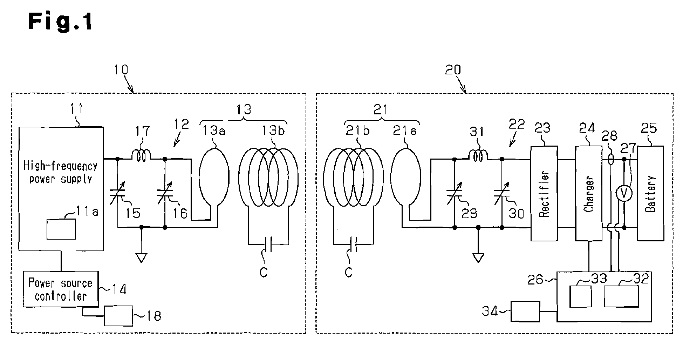

Fig. 1 is a block diagram of a resonance type non-contact power supply system according to one embodiment.

### MODES FOR CARRYING OUT THE INVENTION

Fig. 1 shows a resonance type non-contact power supply system for charging a vehicle-mounted battery according to one embodiment of the present invention.

In Fig. 1, the resonance type non-contact power supply system includes power supply equipment 10 and movable body equipment 20. The power supply equipment 10 is power supply side equipment (power sending side equipment) provided on the ground. The movable body equipment 20 is movable body side equipment mounted in a vehicle (automobile) as a movable body.

The power supply equipment 10 includes a high-frequency power source 11 as an AC power source, a primary matching unit 12, a primary coil device 13 and a power source controller 14. The high-frequency power source 11 includes a reflected electric power detector (reflected electric power detecting means) 11 a, which detects reflected electric power from a primary-side resonance coil 13b. The reflected electric power detector 11a sends a detection signal of reflected electric power to the power source controller 14 serving as a power source side controller. The power source controller 14 sends a power source ON/OFF signal to the high-frequency power source 11. This signal turns the high-frequency power source 11 ON and OFF. The high-frequency power source 11 outputs AC electric power at a frequency that is equal to a preset resonant frequency of a resonance system of the resonance type non-contact power supply system, e.g., high-frequency electric power of about several MHz. If a state in which reflected electric power is not less than a preset value continues for a set period of time or longer, the power source controller 14 controls the high-frequency power source 11 such that power source is stopped on the basis of a reflected electric power detection signal from the reflected electric power detector 11 a.

The primary coil device 13 serving as a primary-side coil includes a primary coil 13a and a primary-side resonance coil 13b. The primary coil 13a is connected to the high-frequency power source 11 through the primary matching unit 12. The primary coil 13a and the primary-side resonance coil 13b are located coaxially. The primary-side resonance coil 13b is connected to a capacitor C in parallel. The primary coil 13a is coupled to the primary-side resonance coil 13b by electromagnetic induction. AC electric power supplied from the high-frequency power source 11 to the primary coil 13a is supplied to the primary-side resonance coil 13b by electromagnetic induction.

The primary matching unit 12 as a primary-side matching unit includes two primary variable capacitors 15 and 16 as variable reactances and a primary inductor 17. One of the primary variable capacitor, 15, 16, or the primary variable capacitor 15 is connected to the high-frequency power source 11, and the other primary variable capacitor 16 is connected to the primary coil 13a in parallel. The primary inductor 17 is connected between the primary variable capacitors 15 and 16. By changing capacities of the primary variable capacitors 15 and 16, the impedance of the primary matching unit 12 is changed. Each of the primary variable capacitors 15 and 16 is of known configuration having a rotary shaft (not shown), which is driven by a motor for example. If the motor is driven by a drive signal from the power source controller 14, the capacities of the primary variable capacitors 15 and 16 are changed.

The movable body equipment 20 includes a secondary coil device 21, a secondary matching unit 22, a rectifier 23, a charger 24, a secondary battery 25 and a vehicle-mounted controller 26. The secondary battery 25 is an electrical storage device, i.e., a battery connected to the charger 24. The vehicle-mounted controller 26 as a vehicle side controller is configured to function as a power source determination unit (power source determination means), a power reception determination unit (power reception determination means) and a control unit (control means). The movable body equipment 20 further includes a voltage sensor 27, which detects voltage of the secondary battery 25, and a current sensor 28, which detects current flowing from the rectifier 23 to the charger 24. The charger 24 includes a DC/DC converter (not shown), which converts DC rectified by the rectifier 23 into voltage suitable for charging the secondary battery 25.

The secondary coil device 21 as a secondary-side coil includes a secondary coil 21 a and a secondary-side resonance coil 21 b. The secondary coil 21 a and the secondary-side resonance coil 21 b are arranged coaxially. The secondary-side resonance coil 21 b is connected to another capacitor C which is different from that of the primary-side resonance coil 13b. The secondary coil 21a is coupled to the secondary-side resonance coil 21 b by electromagnetic induction. AC electric power supplied from the primary-side resonance coil 13b to the secondary-side resonance coil 21b by resonance is supplied to the secondary coil 21a by electromagnetic induction. The secondary coil 21a is connected to the secondary matching unit 22.

The number of turns and winding diameters of the primary coil 13a, the primary-side resonance coil 13b, the secondary-side resonance coil 21 b and the secondary coil 21 a are appropriately set corresponding to the magnitude of electric power to be supplied (transmitted) from the power supply equipment 10 to the movable body equipment 20.

This embodiment, the resonance system includes the primary matching unit 12, the primary coil 13a, the primary-side resonance coil 13b, the secondary-side resonance coil 21 b, the secondary coil 21 a, the secondary matching unit 22, the rectifier 23, the charger 24 and the secondary battery 25.

The secondary matching unit 22 includes two secondary variable capacitors 29 and 30 as variable reactances and a secondary inductor 31. The secondary inductor 31 is connected between the secondary variable capacitors 29 and 30. One of the secondary variable capacitors 29, 30, or the secondary variable capacitor 29 is connected to the secondary coil 21 a in parallel, and the other secondary variable capacitor 30 is connected to the rectifier 23. By changing capacities of the secondary variable capacitors 29 and 30, the impedance of the secondary matching unit 22 is changed. Each of the secondary variable capacitors 29 and 30 is of known configuration having a rotary shaft (not shown), which is driven by a motor for example, and if the motor is driven by a drive signal from the vehicle-mounted controller 26, the capacities of the secondary variable capacitors 29 and 30 are changed.

The vehicle-mounted controller 26 includes a vehicle-mounted CPU 32 and a vehicle-mounted storage device (memory) 33. The vehicle-mounted storage device 33 stores a program for causing the vehicle-mounted controller 26 to function as the power supply determination unit, which determines whether or not electric power is being supplied from the power supply equipment 10 to the movable body equipment 20, and a program for causing the vehicle-mounted controller 26 to function as the power reception determination unit, which determines whether or not electric power should be received by the movable body equipment 20. The vehicle-mounted storage device 33 further stores a program for functioning the vehicle-mounted controller 26 as the control unit, which brings the secondary matching unit 22 into a mismatch state (non-resonance state of resonance system) on the basis of determination information of the power supply determination unit and the power reception determination unit when the power supply equipment 10 is supplying electric power even through the movable body equipment 20 should refuse power reception.

The vehicle-mounted controller 26 controls a switching device of the DC/DC converter of the charger 24 when the secondary battery 25 is charged. The vehicle-mounted controller 26 detects (checks) the state of charge of the secondary battery 25 by detecting and integrating charge voltage and charge current when the secondary battery 25 is charged and discharge voltage and discharge current when the secondary battery 25 is discharged on the basis of detection signals of the voltage sensor 27 and the current sensor 28. The vehicle-mounted controller 26 determines whether or not the power supply equipment 10 is supplying electric power after the charging operation of the secondary battery 25 is started, and determines whether or not the movable body equipment 20 should receive electric power supplied from the power supply equipment 10. When the power supply equipment 10 is supplying electric power to the movable body equipment 20 even though the movable body equipment 20 should refuse power reception, the vehicle-mounted controller 26 controls the secondary matching unit 22 to set the unit 22 into the mismatch state.

] The power source controller 14 includes a power source communication device 18, and the vehicle-mounted controller 26 includes a vehicle-mounted communication device 34. According to this configuration, the power source controller 14 and the vehicle-mounted controller 26 can wirelessly communicate with each other.

Next, operation of the resonance type non-contact power supply system configured as described above will be described.

When the secondary battery 25 mounted in a vehicle is to be charged, the vehicle is stopped at a predetermined charging position of the power supply equipment 10. After the vehicle is stopped at the predetermined charging position of the power supply equipment 10, the vehicle-mounted controller 26 sends a power supply request signal to the power source controller 14. If the power source controller 14 receives the power supply request signal, power supply to the movable body equipment 20 is started. More specifically, if the high-frequency power source 11 of the power supply equipment 10 applies AC voltage of resonant frequency of the resonance system to the primary coil 13a, the primary-side resonance coil 13b supplies electric power to the secondary-side resonance coil 21b by non-contact resonance. Electric power received by the secondary-side resonance coil 21 b is supplied to the charger 24 through the secondary matching unit 22 and the rectifier 23. As a result, the secondary battery 25 connected to the charger 24 is charged.

When the secondary battery 25 mounted in the vehicle is to be charged, the vehicle does not always precisely stop at the charging position where electric power is efficiently supplied from the power supply equipment 10 to the movable body equipment 20 in the non-contact manner. Hence, the primary matching unit 12 and the secondary matching unit 22 may be adjusted prior to the charging operation. For example, the vehicle-mounted controller 26 may be configured to adjust the secondary matching unit 22 on the basis of data indicative of the relationship between the state of charge of the secondary battery 25 when the secondary battery 25 is charged in a normal state and a suitable impedance of the secondary matching unit 22 corresponding to the state of charge.

When the secondary battery 25 is charged, if the state of charge (SOC) of the secondary battery 25 is varies, an input impedance of the resonance system in the resonant frequency of the resonance system is varied. Hence, if a matching degree between the high-frequency power source 11 and the input impedance of the resonance system deviates from its optimal state, electric power cannot efficiently be supplied (fed) from the power supply equipment 10 to the movable body equipment 20. Hence, during the charging operation, the vehicle-mounted controller 26 adjusts the impedance of the secondary matching unit 22 to a suitable value in accordance with the state of charge of the secondary battery 25, so that even if the state of charge of the secondary battery 25 varies during the charging operation, the charging operation is efficiently carried out by making the power supply equipment 10 efficiently supply electric power to the movable body equipment 20.

If the vehicle-mounted controller 26 determines, on the basis of time elapsed from when voltage of the secondary battery 25 becomes equal to predetermined voltage, that the secondary battery 25 is fully charged, the vehicle-mounted controller 26 stops the charging operation of the charger 24, and sends a charging-completion signal to the power source controller 14. Even before the secondary battery 25 is not yet fully charged, if a driver inputs a charging-stopping command, the vehicle-mounted controller 26 stops the charging operation of the charger 24, and sends the charging-completion signal to the power source controller 14. If the power source controller 14 receives the charging-completion signal, the power source controller 14 completes the transmission (feeding) of electric power.

After the charging operation is started, by using detection signals of the voltage sensor 27 and the current sensor 28, the vehicle-mounted controller 26 determines whether or not electric power is being supplied from the power supply equipment 10 to the movable body equipment 20 with a predetermined period. The vehicle-mounted controller 26 determines whether or not the movable body equipment 20 should receive electric power supplied from the power supply equipment 10, i.e., whether or not reception of power (charging) should be continued. For example, when the secondary battery 25 is fully charged or when the charging-stopping command is input, the vehicle-mounted controller 26 determines that electric power supplied from the power supply equipment 10 should not be received, and outputs the charging-stopping command to the charger 24. If the charger 24 is supplying electric power even though the charging-stopping command is output to the charger 24, i.e., even though the movable body equipment 20 should refuse the power reception from the power supply equipment 10, the vehicle-mounted controller 26 determines that a failure has occurred in the charger 24. Then, the vehicle-mounted controller 26 brings the secondary matching unit 22 into the mismatch state by driving the secondary variable capacitors 29 and 30, i.e., by changing the capacities of these capacitors. That is, when the charging operation of the secondary battery 25 cannot be canceled even though cancellation of the charging operation is desired, e.g., when the charging operation of the secondary battery 25 is not canceled even though the secondary battery 25 is fully charged and the charging-completion signal is output, or when the charging operation of the secondary battery 25 is not canceled even though the charging-stopping command is input before the secondary battery 25 is fully charged because of a driver's convenience, the vehicle-mounted controller 26 brings the secondary matching unit 22 into the mismatch state.

If the secondary matching unit 22 is brought into the mismatch state, the resonance state of the resonance system is disrupted. It thus becomes substantially impossible to supply electric power from the power supply equipment 10 to the movable body equipment 20 in the non-contact manner. As a result, it is possible to avoid a case where after the secondary battery 25 is fully charged, the charging operation of the secondary battery 25 is adversely continued, and the secondary battery 25 is overcharged. It is also possible to avoid a case where even though the charging-stopping command is output to the charger 24, the charging operation of the secondary battery 25 is continued.

A basic completion procedure of power supply and charging is that the power supply and charging are completed in a state in which electric power reflection from the power reception side to the power supply side is not generated. On the other hand, even if the charger 24 cannot complete the charging operation of the secondary battery 25 in the basic completion procedure, the charging operation can be completed by turning OFF the switch of the charger 24 in some cases. In such a case, although it is also possible to stop the charging operation of the secondary battery 25 by turning the switch of the charger 24 OFF during the charging operation of the secondary battery 25, the load applied to the charger 24 is adversely increased. Especially when electric power to be supplied is great as a case where a secondary battery 25 of an electric vehicle is charged, a load applied to the charger 24 is adversely increased. According to the present embodiment, however, since it is possible to stop the power supply to the charger 24 by bringing the secondary matching unit 22 into the mismatch state, it is possible to reduce a load applied to the charger 24.

On the other hand, if a state in which the magnitude of the reflected electric power detected by the reflected electric power detector 11 a is greater than a preset value continues for a predetermined period of time or longer, the power source controller 14 determines that the movable body equipment 20 cannot received electric power or it is not desired that the movable body equipment 20 receives electric power even if a charging-completion signal is not received from the vehicle-mounted controller 26. On the basis of the determination result, the power source controller 14 completes the transmission (feeding) of electric power.

This embodiment has the following disadvantages.

(1) The resonance type non-contact power supply system includes the power supply equipment 10 and the movable body equipment 20. The power supply equipment 10 includes the AC power source (high-frequency power source 11) and the primary-side resonance coil 13b, which receives power supply from the AC power source. The movable body equipment 20 includes the secondary-side resonance coil 21 b, which receives electric power from the primary-side resonance coil 13b, the rectifier 23, which rectifies electric power received by the secondary-side resonance coil 21b, the charger 24, to which electric power rectified by the rectifier 23 is supplied, and the secondary battery 25 connected to the charger 24. The vehicle-mounted controller 26 in the movable body equipment 20 is configured to function as the power supply determination unit, which determines whether or not electric power is being supplied from the power supply equipment 10 to the movable body equipment 20, and also function as the power reception determination unit, which determines whether or not the movable body equipment 20 should receive electric power from the power supply equipment 10. If electric power is being supplied to the movable body equipment 20 even though the movable body equipment 20 should refuse the power reception, the vehicle-mounted controller 26 is configured to function as the control unit, which brings the secondary matching unit 22 into the mismatch state on the basis of the determination information of the power supply determination unit and the power reception determination unit. Therefore, when a charging operation cannot be canceled due to a failure of the power reception side (movable body equipment 20) even though the power reception side desires to cancel the charging operation of the secondary battery 25, the power reception side (movable body equipment 20) can cancel the charging operation of the secondary battery 25 even if the movable body equipment 20 does not require the power supply side (power supply equipment 10) to cancel the power supply through wireless communication.

(2) When a charging operation of the secondary battery 25 cannot be canceled even though cancellation thereof is desired, the control unit (vehicle-mounted controller 26) brings the secondary matching unit 22 into the mismatch state. Therefore, when the charging operation cannot actually be completed even if the charger attempts to complete the charging operation by a fully-charged signal during the charging operation, or when the charging operation cannot be canceled even though the charging-cancellation command is output before the secondary battery 25 is fully charged, the control unit (vehicle-mounted controller 26) can cancel the charging operation of the secondary battery 25 by bringing the secondary matching unit 22 into the mismatch state.

(3) If a state in which reflected electric power from the power reception side to the power supply side is not less than the preset value continues for the set period of time or longer, the power supply equipment 10 including the reflected electric power detector 11a stops the power supply. Therefore, even when the vehicle-mounted controller 26 completes the charging operation of the secondary battery 25 without sending the charging-completion signal to the power source controller 14, the power supply equipment 10 can stop the power supply. That is, it is possible to avoid a case where the power supply equipment 10 adversely continues the power supply in a state in which the reflected electric power is great.

The embodiment is not limited to those described above, and the embodiment may be modified as follows, for example.

The state in which the movable body equipment 20 should refuse the power reception is not limited to the case where the movable body equipment 20 cannot stop a charging operation after the charging operation is started. For example, the movable body equipment 20 should refuse the power reception also when electric power is transmitted (fed) from the power supply equipment 10 to the movable body equipment 20 even though the movable body equipment 20 is not yet ready for the charging operation. In this case, the vehicle-mounted controller 26 is configured to exert the functions as the power supply determination unit, the power reception determination unit and the control unit before the charging operation of the secondary battery 25 is started, e.g., from when a vehicle starts moving toward the charging position of the power supply equipment 10, for example. The vehicle-mounted controller 26 in this case brings the secondary matching unit 22 into the mismatch state when the power supply equipment 10 starts transmitting (feeling) electric power before a preparation for a charging operation of the movable body equipment 20 is completed and the vehicle-mounted controller 26 sends a power supply request signal to the power source controller 14.

To make the resonance type non-contact power supply system supply electric power from the power supply equipment 10 to the movable body equipment 20 in the non-contact manner, not all of the primary coil 13a, the primary-side resonance coil 13b, the secondary coil 21 a and the secondary-side resonance coil 21 b are necessary. That is, it is only necessary that the resonance type non-contact power supply system include at least the primary-side resonance coil 13b and the secondary-side resonance coil 21 b. That is, the primary coil device 13 does not necessarily include both of the primary coil 13a and the primary-side resonance coil 13b. It is possible to omit the primary coil 13a, and only the primary-side resonance coil 13b may be connected to the high-frequency power source 11 through the primary matching unit 12. Alternatively, the secondary coil device 21 does not necessarily include both of the secondary coil 21 a and the secondary-side resonance coil 21 b, the secondary coil 21 a may be omitted, and only the secondary-side resonance coil 21 b may be connected to the rectifier 23 through the secondary matching unit 22. However, if the resonance type non-contact power supply system includes all of the primary coil 13a, the primary-side resonance coil 13b, the secondary coil 21 a and the secondary-side resonance coil 21 b, it is easy to adjust the resonance type non-contact power supply system in the resonance state, and even if the distance between the primary-side resonance coil 13b and the secondary-side resonance coil 21b becomes great, it is easy to maintain the resonance state.

A vehicle as the movable body means a vehicle including an electric motor that generates a travelling drive force. That is, examples of vehicles to which the present invention is applied are an electric automobile, a hybrid vehicle in which an internal combustion engine is mounted together with an electric motor as power sources, and a vehicle in which the secondary battery 25 and a fuel battery are also mounted as DC power supplies for driving the vehicle. The vehicle as the movable body is not limited to one requiring a driver, and the vehicle may be an unmanned carrier.

The movable body is not limited to a vehicle. That is, the present invention may be applied to any type of movable body as long as the movable body may move away from the power supply equipment when the movable body is not charging. That is, the movable body may be a robot for example.

To detect (check) the state of charge of the secondary battery 25, the vehicle-mounted controller 26 is not limited to detect or integrate charge voltage and charge current when the secondary battery 25 is charged and discharge voltage and discharge current when the secondary battery 25 is discharged on the basis of the detection signals of the voltage sensor 27 and the current sensor 28. For example, the vehicle-mounted controller 26 may check the state of charge of the secondary battery 25 from voltage of the secondary battery 25 by detecting the voltage of the secondary battery 25. However, it is possible to precisely detect (check) the state of charge in the former case where progress of both the charge and discharge of the secondary battery 25 is taken into consideration.

In place of a configuration in which the rectifier 23 and the charger 24 are provided to be independent from each other, the movable body equipment 20 may be configured such that the charger 24 incorporates the rectifier 23.

In the movable body equipment 20, the charger 24 does not necessarily need to be provided with the booster circuit, and the secondary battery 25 may be charged only by rectifying AC current output from the secondary coil device 21 by the rectifier 23.

It is only necessary that the electrical storage device be a DC power supply that can be charged and discharged. That is, the electrical storage device, which is charged in accordance with the invention, is not limited to the secondary battery 25, and may be a large-capacity capacitor for example.

The primary matching unit 12 and the secondary matching unit 22 do not necessarily need to have two variable capacitors and an inductor. The inductor may be a variable inductor. Each of the primary matching unit 12 and the secondary matching unit 22 may include a variable inductor and two non-variable capacitors.

The high-frequency power source 11 may be configured to be capable of or incapable of changing the frequency of power AC voltage.

The primary matching unit 12 may be omitted. However, if the primary matching unit 12 exists, it is easy to adjust the impedance of the resonance system more finely as compared with a case where the primary matching unit 12 does not exist. Therefore, it is possible to more efficiently supply electric power from the power supply side to the power reception side.

The capacitors C, which are respectively connected to the primary-side resonance coil 13b and the secondary-side resonance coil 21 b, may be omitted. However, if the capacitors C are respectively connected to the primary-side resonance coil 13b and the secondary-side resonance coil 21b, the resonant frequency can further be lowered as compared with a case where the capacitors C are omitted. If the resonant frequency is the same the primary-side resonance coil 13b and the secondary-side resonance coil 21 b can be made compact if the capacitors C are respectively connected to the primary-side resonance coil 13b and the secondary-side resonance coil 21 b as compared with the case where the capacitors C are omitted.

## Claims

1. A resonance type non-contact power supply system comprising:
power supply equipment including an AC power source and a primary-side resonance coil, which receives power supply from the AC power source; and
movable body equipment including a secondary-side resonance coil, which receives electric power from the primary-side resonance coil, a rectifier, which rectifies electric power received by the secondary-side resonance coil, a charger, to which electric power rectified by the rectifier is supplied, and an electrical storage device, which is connected to the charger, wherein
the movable body equipment includes:
a matching unit provided between the secondary-side resonance coil and the rectifier;
a power supply determination unit, which determines whether or not electric power is being supplied from the power supply equipment to the movable body equipment;
a power reception determination unit, which determines whether or not the movable body equipment should receive electric power from the power supply equipment; and
a control unit, wherein, on the basis of determination information of the power supply determination unit and determination information of the power reception determination unit, the control unit brings the matching unit into a mismatch state when electric power is being supplied from the power supply equipment to the movable body equipment even though the movable body equipment should refuse power reception from the power supply equipment.

2. The resonance type non-contact power supply system according to claim 1, wherein the control unit is configured to bring the matching unit into a mismatch state when a charging operation of the electrical storage device cannot be canceled even though cancellation of the charging operation is desired.

3. The resonance type non-contact power supply system according to claim 1 or 2, wherein the case where electric power is being supplied even though power reception should be refused is a case where the charging operation of the electrical storage device is not completed even though a charging-completion signal associated with the full charge state of the electrical storage device has been output.

4. The resonance type non-contact power supply system according to any one of claims 1 to 3, wherein the movable body equipment is mounted and used in an electric vehicle.

5. The resonance type non-contact power supply system according to any one of claims 1 to 4, wherein
the power supply equipment includes a reflected electric power detector, which detects reflected electric power from the movable body equipment to the power supply equipment, and
the power supply equipment is configured to stop power supply if a state in which the reflected electric power is not less than a preset value continues for a set period of time or longer.

6. The resonance type non-contact power supply system according to any one of claims 1 to 5, wherein the control unit is configured to adjust the matching unit on the basis of data indicative of a relationship between a state of charge of the electrical storage device when the charging operation is carried out in a state in which the electrical storage device is normally charged and a suitable impedance of the matching unit corresponding to the state of charge.
